# EUROPEAN PATENT SPECIFICATION

(11) **EP 4 348 066 B1**
(45) Date of publication and mention of the grant of the patent: **09.12.2026**
(21) Application number: 22814612.2
(22) Date of filing: 01.06.2022
(51) Int. Cl.: F16B 37/08, E02F 9/28, F16B 37/12

(54) **ATTACHMENT OF A WEAR MEMBER**
BEFESTIGUNG EINES VERSCHLEISSTEILS
FIXATION D'UN ÉLÉMENT D'USURE

(30) Priority: 04.06.2021 AU 2021901661
(43) Date of publication of application: 10.04.2024
(73) Proprietor: Talon Engineering SDN. BHD., Ipoh, Perak 31650 (MY)
(72) Inventor: YECK, Wai Hoong, Ipoh, 31650 (MY); DENNIS, Neil, Claremont 6010 (AU)
(74) Representative: Murgitroyd & Company
(86) International application number: PCT/AU2022/050537
(87) International publication number: WO 2022/251914

(56) References cited:
- US-A- 5 410 826
- US-A- 5 909 962
- US-A1- 2011 314 709
- US-A1- 2011 314 709

## Description

### Field of the Invention

The present invention relates to a locking assembly for attachment of ground engaging tools to earthmoving equipment. The present invention has been designed for the attachment of a wing shroud to a bucket of a cable shovel, but is considered to have wider application in the attachment of ground engaging tools.

### Background to the Invention

Buckets of excavating equipment are subject to significant abrasive wear during use. For this reason, replaceable ground engaging tools (GET) are located about the buckets in the areas most susceptible to wear. A number of different GET are used, including wing shrouds, heel shrouds, lip shrouds, adaptors, wear plates, teeth and corner shrouds.

The connection of shrouds such as lip shrouds and wing shrouds to bucket edges has presented a consistent challenge, and there are many different systems currently available which seek to perform this task in an efficient manner.

Broadly speaking, GET attachment systems fall into two classes: pinned systems and external systems. Pinned systems use an aperture which passes through a wall of the bucket, with some sort of locking device located in the aperture. External systems use some external formation on the bucket, such as a boss, to provide a bearing surface against which a lock can locate.

In general, external systems are useful for relatively small forces (or smaller GET components). When the relevant forces are relatively large, pinned systems are preferred.

A traditional pinned system uses a wedge-and-spool arrangement. In such an arrangement, the pin consists of two members which bear against each other along a tapered connection, with an activating bolt holding the members together. Turning of the bolt causes the members to move relative to each other along the tapered connection, increasing the effective width of the pin. Such a system can be tightened whereby the pin is locked in position within the bucket aperture.

One such tapered connection is shown in US patent number 5,909,962, which uses a three-part pin with each part being oval-shaped in cross section to engage within an oval-shaped slot of the GET.

Wedge and spool systems are efficient in locking the pin within the bucket aperture and thus preventing loss of the GET. Traditional systems have limited capability to adjust to wear of the GET, however, and therefore even when secure against loss the GET can be relatively loose and prone to vibration or rattling.

The present invention seeks to provide a locking system for wing shrouds and similar GET which alleviates, at least in part, some of the above problems.

### Summary of the Invention

According to one aspect of the present invention there is provided a lock for a ground engaging tool, the lock having a first locking member, a second locking member and a tightening element;
the first locking member having an axial bore;
the second locking member having an axial bore;
the tightening element arranged to locate with the axial bores of the first and second locking members, defining an axial direction of the lock;
a transverse plane of the lock being defined as perpendicular to the axial direction;
the first locking member having at least one planar guiding surface, the guiding surface facing generally towards the second locking member, the guiding surface being located on a lateral side of the first locking member, the guiding surface being oriented at an acute angle relative to the transverse plane. The guiding surface is arranged, in use, to locate against a guiding surface of the ground engaging tool.

The first locking member preferably has two guiding surfaces, the two guiding surfaces being located on opposite transverse sides of the first locking member, the two guiding surfaces being parallel to each other and level with each other; that is, being co-planar.

The acute angle is preferably between 20° and 60°. It is preferred that the acute angle be between 20° and 45°. It is most preferred that the acute angle be about 30°.

The first locking member preferably has an outer facing surface, the outer facing surface facing generally away from the second locking member, the outer facing surface being generally parallel to the guiding surface.

In use, the or each guiding surface is arranged to bear against a corresponding guiding surface of the ground engaging tool and thus provide a rearward force on the ground engaging tool, and the outer facing surface is arranged to face towards a corresponding inner facing surface of the ground engaging tool.

It is preferred that the outer facing surface is located on a lateral side of the first locking member. The outer facing surface may be located on two opposite lateral sides of the first locking member.

In a preferred embodiment, the first locking member has an axially aligned body portion, and a collar extending laterally of the body portion at an outer end thereof, the collar being oriented at the acute angle relative to the transverse plane. In this embodiment the collar has an outwardly facing surface forming the outer facing surface of the first locking member, and at least one inwardly facing surface forming the guiding surface of the first locking member.

The collar preferably includes a front wall extending laterally across the first locking member. The front wall preferably has an outer surface which is perpendicular to the transverse plane.

The body portion may have a head receiving region at an outer axial end thereof. The head receiving region may be generally in the shape of a right triangular prism, with a base perpendicular to the axial bore, a rear wall parallel to the axial bore, and an inclined top edge which forms a hypotenuse when viewed from the side. The top edge is preferably included at the acute angle relative to the transverse plane.

The second locking member preferably has at least one guiding surface, the guiding surface facing generally towards the first locking member, the guiding surface being located on a lateral side of the second locking member, the guiding surface being oriented at an acute angle relative to the transverse plane. It is preferred that the acute angle of the second locking member guiding surface be the same as that of the first locking member guiding surface.

The arrangement is such that the guiding surface of the second locking member is a reflection of the guiding surface of the first locking member about the transverse plane. In other words, the guiding surface of the first locking member is angled with respect to the guiding surface of the second locking member by an angle equal to the sum of the acute angles of the first locking member guiding surface and the second locking member guiding surface.

It is preferred that the second locking member has two guiding surfaces, located on opposite lateral sides of the second locking member.

The second locking member preferably has an outer facing surface, the outer facing surface facing generally away from the first locking member, the outer facing surface being generally parallel to the guiding surface of the second locking member.

It is preferred that the outer facing surface is located on a lateral side of the second locking member. The outer facing surface may be located on two opposite lateral sides of the second locking member.

In a preferred embodiment, the second locking member has an axially aligned body portion, and a collar extending laterally of the body portion at an outer end thereof, the collar being oriented at the acute angle relative to the transverse plane. In this embodiment the collar has an outwardly facing surface forming the outer facing surface, and an inwardly facing surface forming the guiding surface.

It is preferred that the first locking member has an axially extending locating portion, and the second locking member has a complementary receiving portion. Advantageously, the cooperation of the locating portion and the receiving portion acts to restrain relative rotation of the first and second locking portions about the tightening element. Additionally, this cooperation acts to strengthen the lock and reduce the risk of bending the tightening element.

Preferably the tightening element is a bolt. In a preferred embodiment, the bolt is externally threaded, and one of the first and second locking members includes an enlarged region in which a head of the bolt may be received, and the other of the first and second locking members has an internally threaded bore in which a shank of the bolt can be engaged.

The enlarged region is preferably associated with a generally planar front surface and a generally planar rear surface. The front surface and the rear surface may be parallel to each other, and perpendicular to the transverse plane.

According to a second aspect of the present invention there is provided a ground engaging tool arranged to locate about an excavator bucket edge, the ground engaging tool having a longitudinal direction being the direction in which the ground engaging tool is moved to locate on the excavator bucket edge, the ground engaging tool having two legs arranged to locate about an excavator bucket edge, a first leg including a first lock receiving aperture and a second leg including a second lock receiving aperture, the first and second lock receiving apertures being aligned;
the first lock receiving aperture having two lateral sides,
at least one lateral side including a guiding surface, the guiding surface being oriented at a first acute angle relative to the longitudinal direction, the guiding surface facing away from the second lock receiving aperture; and
the first lock receiving aperture including an inner facing surface, the inner facing surface being oriented at a second acute angle relative to the longitudinal direction, the inner facing surface facing towards the second lock receiving aperture.

The first and second acute angles are preferably between 20° and 60°. It is preferred that the first and second acute angles are between 20° and 45°. It is most preferred that the first and second acute angles are both about 30°.

Preferably the first acute angle and the second acute angle are the same; that is, the guiding surface is parallel to the inner facing surface.

It is preferred that the inner facing surface extends across a front of the first lock receiving aperture, from one lateral side to the other.

It is preferred that both lateral sides include a guiding surface, the two guiding surfaces being parallel to each other and co-planar.

The first lock receiving aperture preferably has a generally planar rear surface, the rear surface being perpendicular to the longitudinal direction. The first lock receiving aperture preferably has a front surface with at least two portions, a first portion extending inwardly from an outer surface of the ground engaging tool, the first portion being parallel to the rear surface, and a second portion extending inwardly and forwardly from the first portion, the second portion forming the inner facing surface. The front surface may include a third portion parallel to the first portion, the third portion extending from a forward-most edge of the second portion towards the second lock receiving aperture.

It is preferred that the guiding surface extends from the rear surface to a termination point, the termination point being located about midway between the rear surface and a forward-most edge of the second portion of the front surface.

The inner facing surface is preferably parallel to the guiding surface.

The second lock receiving aperture may include two lateral sides, at least one lateral side including a guiding surface, the guiding surface being oriented at an acute angle relative to the longitudinal direction, the guiding surface facing away from the first lock receiving aperture.

It is preferred that both lateral sides include a guiding surface, the two guiding surfaces being parallel to each other and co-planar.

The second lock receiving aperture preferably includes an inner facing surface, the inner facing surface being oriented at the acute angle relative to the longitudinal direction, the inner facing surface facing towards the first lock receiving aperture.

It is preferred that the inner facing surface extends across a front of the second lock receiving aperture, from one lateral side to the other.

The second lock receiving aperture preferably has a generally planar rear surface, the rear surface being perpendicular to the longitudinal direction. The second lock receiving aperture preferably has a front surface with at least two portions, a first portion extending inwardly from an outer surface of the ground engaging tool, the first portion being parallel to the rear surface, and a second portion extending inwardly and forwardly from the first portion, the second portion forming the inner facing surface. The front surface may include a third portion parallel to the first portion, the third portion extending from a forward-most edge of the second portion towards the first lock receiving aperture.

The third portion of the front wall of the second lock receiving aperture is preferably deeper than the third portion of the front wall of the first lock receiving aperture.

It is preferred that the guiding surface extends from the rear surface to a termination point, the termination portion being located about midway between the rear surface and a forward-most edge of the second portion of the front surface.

The inner facing surface is preferably parallel to the guiding surface.

According to a third aspect of the present invention there is a provided a method of attaching a ground engaging tool to a bucket edge, the method including the steps of:
providing at least one aperture passing through the bucket edge;
locating the ground engaging tool about the bucket edge such that two legs of the ground engaging tool are positioned about the excavator bucket edge, a first leg including a first lock receiving aperture and a second leg including a second lock receiving aperture, the first and second lock receiving apertures being aligned with the aperture of the bucket edge, the first lock receiving aperture having a guiding surface oriented at an acute angle relative to a longitudinal direction of the ground engaging tool;
locating a first locking member in the first receiving aperture such that a guiding surface of the first locking member is oriented at an acute angle relative to the longitudinal direction of the ground engaging tool;
locating a second locking member in the second receiving aperture;
connecting axial bores of the first and second locking members by a tightening element; and
tightening the tightening element to cause the guiding surface of the first locking member to bear against the guiding surface of the first lock receiving aperture, thus urging the ground engaging tool rearwardly relative to the bucket edge.

Preferably the second lock receiving aperture has a guiding surface oriented at an acute angle relative to the longitudinal direction of the ground engaging tool; the step of locating the second locking member in the second receiving aperture is done such that a guiding surface of the second locking member is oriented at an acute angle relative to the longitudinal direction of the ground engaging tool; and tightening of the tightening element causes the guiding surface of the second locking member to bear against the guiding surface of the second lock receiving aperture.

It is preferred that the first lock receiving aperture has an inner facing surface, and that the first locking member has an outer facing surface arranged to bear against the inner facing surface. The inner facing surface and the outer facing surface may be oriented at the acute angle, such that the outer facing surface moves along the inner facing surface during tightening of the tightening element.

It is also preferred that the second lock receiving aperture has an inner facing surface, and that the second locking member has an outer facing surface arranged to bear against the inner facing surface. The inner facing surface and the outer facing surface may be oriented at the acute angle, such that the outer facing surface of the second locking member moves along the inner facing surface of the second lock receiving aperture during tightening of the tightening element.

### Brief Description of the Drawings

It will be convenient to further describe the invention with reference to preferred embodiments of the present invention. Other embodiments are possible, and consequently the particularity of the following discussion is not to be understood as superseding the generality of the preceding description of the invention. In the drawings:
Figure 1 is an exploded view of a locking system for a wing shroud in accordance with the present invention;
Figure 2 is an upper perspective of a first locking member from within the locking system of Figure 1;
Figure 3 is a first side view of the first locking member of Figure 2;
Figure 4 is a second side view of the first locking member of Figure 2;
Figure 5 is a cross section through the first locking member of Figure 2;
Figure 6 is a first perspective of a second locking member from within the locking system of Figure 1;
Figure 7 is a second perspective of the second locking member of Figure 6;
Figure 8 is a cross section through the second locking member of Figure 6;
Figure 9 is an exploded view of a lock from within the locking system of Figure 1;
Figure 10 is an assembled view of the lock of Figure 9;
Figures 11a and 11b are cross sections through the lock of Figure 9 showing a bolt in two different rotational positions;
Figure 12 is a schematic representation of a portion of a bucket edge from within the locking system of Figure 1;
Figure 13 is a side view of the bucket edge of Figure 12;
Figure 14 is a first perspective of a wing shroud from within the locking system of Figure 1;
Figure 15 is a second perspective of the wing shroud of Figure 14;
Figure 16 is a third perspective of the wing shroud of Figure 14;
Figure 17 is a plan view of the wing shroud of Figure 14;
Figure 18 is a first lock receiving aperture within the wing shroud of Figure 14;
Figure 19 is a second first lock receiving aperture within the wing shroud of Figure 14;
Figure 20 is a cross section through the wing shroud of Figure 14;
Figure 21 is a cut-away view through the wing shroud of Figure 14; and
Figures 22 to 33 are views of the locking system of Figure 1 during assembly and use.

### Detailed Description of Preferred Embodiments

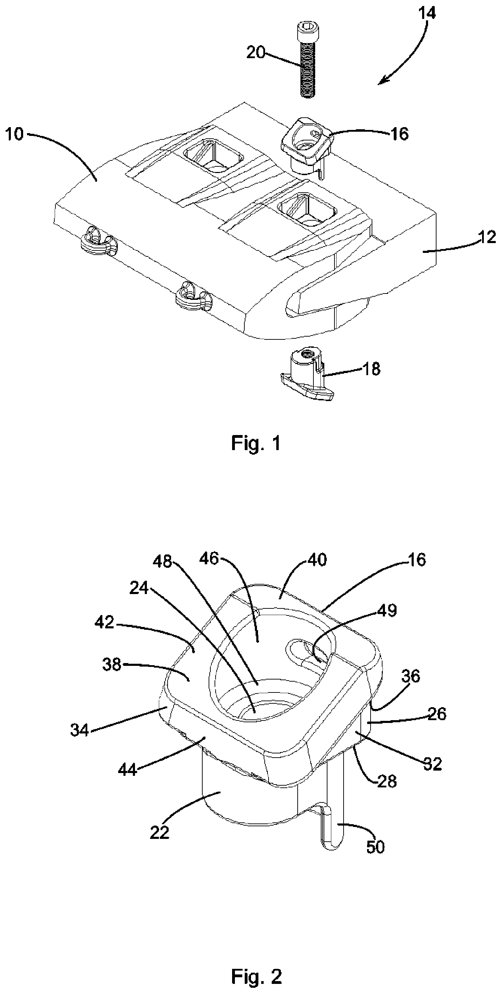

Referring to the Figures, Figure 1 shows a wing shroud 10 being located about a side edge 12 (or "wing") of an excavator bucket. The wing shroud 10 is locked onto the bucket edge 12 by means of a lock 14 including a first locking member 16, a second locking member 18, and a tightening element being a bolt 20.

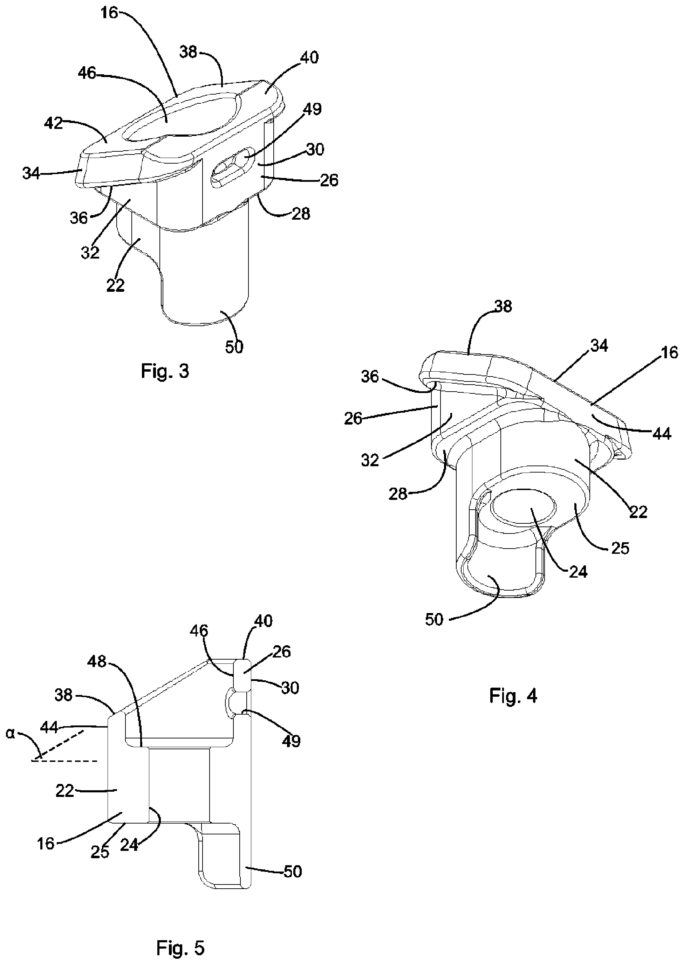

The first locking member 16 is shown in Figures 2 to 5. The first locking member 16 has a body portion 22 which is generally prismatic based on a stadium (an oval with straight sides). The body portion 22 has an axial bore 24 passing therethrough. The body portion 22 has an inner end 25.

The body portion 22 has a head receiving region 26 at an outer axial end thereof. The head receiving region 26 is generally in the shape of a right triangular prism. The head receiving region 26 has a base 28 perpendicular to the axial bore 24, the base 28 being approximately square. The head receiving region 26 has a rear wall 30 parallel to the axial bore 24, and perpendicular to the straight sides of the body portion 22. The head receiving region 26 has an inclined top edge which forms a hypotenuse when viewed from the side. The head receiving region 26 has two right-triangular side walls 32.

A collar 34 extends around the inclined top edge of the head receiving region 26. The collar 34 is angled at an acute angle α relative to the base 28 of the head receiving region 26. In the embodiment of the drawings the acute angle α is about 30°.

The collar 34 extends beyond the head receiving region 26 on two lateral sides of the first locking member 16. This creates a lip on each side, each lip having a surface facing towards an inner end of the body portion 22. These surfaces act as guiding surfaces 36 for the first locking member 16. The guiding surfaces 36 extend away from, and perpendicular to, the side walls 32 of the head receiving region 26.

The collar 34 has a generally annular upper surface 38. The upper surface 38 has a flattened rear portion 40, which extends forward of the rear wall 30 and is parallel to the base 28. The remainder of the upper surface 38 forms an outer facing surface 42 for the first locking member 16. The outer facing surface 42 is parallel to the guiding surface 36; that is, is angled at the acute angle α relative to the base 28.

The collar 34 has a front wall 44 parallel to the rear wall 30 of the head receiving region 26.

The axial bore 24 opens into a wider cylindrical aperture 46 in the head receiving region 26. This results in an annular seat 48 being created at the base of the wider cylindrical aperture 46, around a mouth of the axial bore 24.

A slot 49 is located at a rear of the cylindrical aperture 46, beneath the flattened rear portion 40. The slot 49 extends from the cylindrical aperture 46 through to the rear wall 30. The slot 49 is shaped to receive a tool such as a flathead screw driver to assist in removal of the lock 14 after use.

The first locking member 16 has an axially extending locating portion being a skirt 50 extending from an inner end thereof. The skirt 50 is located on the side of the first locking member 16, and has an outer shape consistent with the curve of the rear of the body portion 22.

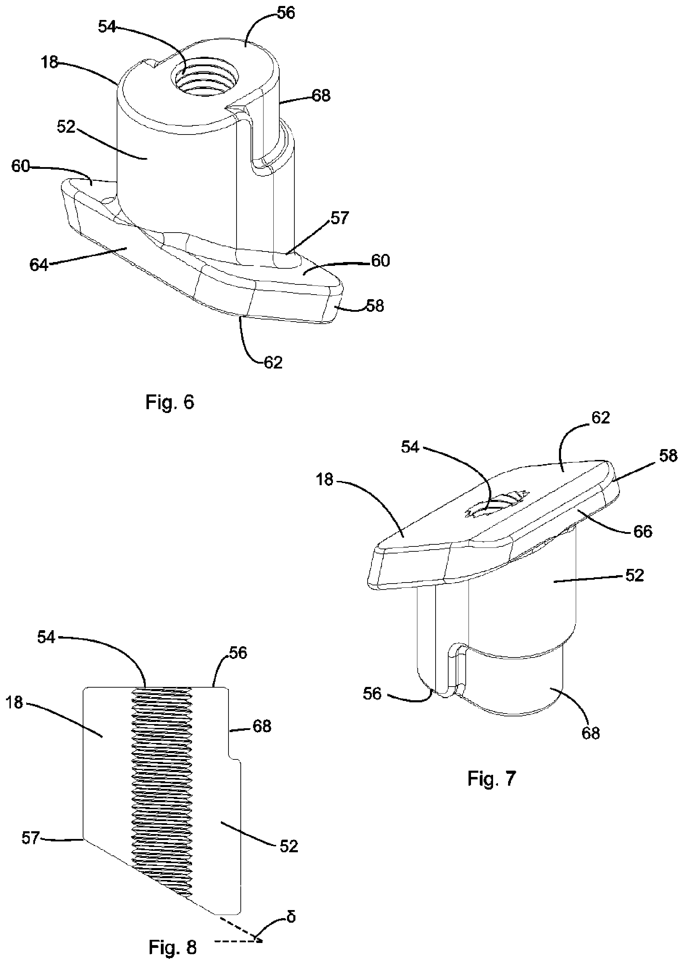

The second locking member 18 is shown in Figures 6 to 8. The second locking member 18 has a body portion 52 which is generally prismatic based on the same stadium shape and size as the body portion 22 of the first locking member 16. The body portion 52 has a threaded axial bore 54 passing therethrough.

The body portion 52 has an inner end 56 which is perpendicular to the threaded axial bore 54, and an outer end 57 which is inclined relative to the threaded axial bore 54. A collar 58 extends around the inclined outer end 57 of the body portion 52. The collar 58 is angled at an acute angle relative to the inner end 56. The acute angle δ is the same as that of the collar 34 of the first locking member 16; that is, in the embodiment of the drawings, the acute angle δ is about 30°.

The collar 58 extends beyond the body portion 52 on two lateral sides of the second locking member 18. This creates a lip on each side, each lip having a surface facing towards the inner end 56. These surfaces act as guiding surfaces 60 for the second locking member 18.

The collar 58 has a generally annular outer surface, which forms an outer facing surface 62 for the second locking member 18. The outer facing surface 62 is parallel to the guiding surfaces 60; that is, is angled at the acute angle δ relative to the inner end 56.

The collar 58 has a front wall 64 and a rear wall 66. The front wall 64 and the rear wall 66 are parallel to each other, and perpendicular to the inner end 56.

The second locking member 18 has a receiving portion being a cut-out 68 around a rear of the body portion 52, extending axially from the inner end 56. The cut-out 68 is complementary in shape to the skirt 50 of the first locking member 16.

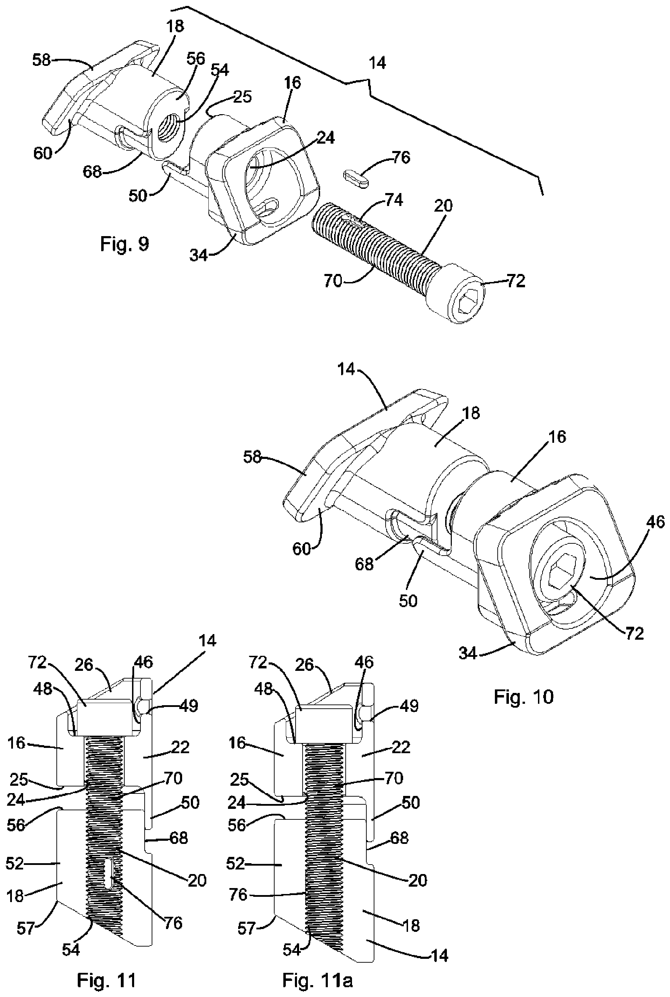

The assembled configuration of the lock 14 is shown in Figures 9 to 11. The first locking member 16 and the second locking member 18 are brought together such that their inner ends 25, 56 face each other, and the skirt 50 locates in the cut-out 68. In this way the axial bore 24 and the threaded axial bore 54 are axially aligned.

The bolt 20 has a threaded shank 70 sized to engage with the threaded axial bore 54, and a head 72 sized to locate within the wider cylindrical aperture 46 of the head receiving region 26 and to seat against the annular seat 48. The threaded shank 70 is passed through the axial bore 24 of the first locking member 16 and engages with the threaded axial bore 54 of the second locking member 18 to hold the first and second locking members 16, 18 together as shown in Figure 10.

The threaded shank 70 includes a longitudinally aligned recess 74 arranged to receive a torque locking strip 76. The torque locking strip 76 acts to resist vibration and loosening of the lock 14.

It will be appreciated that the cross sectional shape of the assembled lock 14 is loosely trapezoidal; that is, the collar 34 of the first locking member 16 and the collar 58 of the second locking member 18 are inclined towards each other. The angle between them is thus the sum of the two acute angles α + δ; i.e., about 60°.

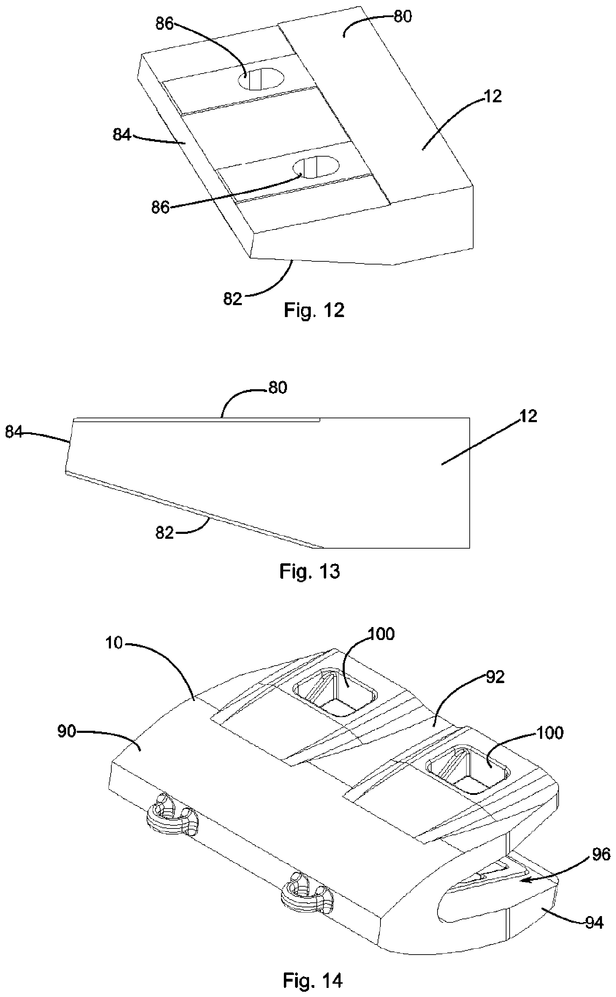

Figures 12 and 13 show a portion of a bucket edge 12 of an excavator bucket. The bucket edge 12 has an outer face 80 and an inner face 82, separated by a leading edge 84. The inner face 82 has a slight taper relative to the outer face 80.

The bucket edge 12 includes two laterally spaced apertures 86 extending between the outer face 80 and the inner face 82. Each of the apertures 86 is generally stadium shaped in cross section. The stadium shape has ends with a radius of curvature slightly greater than that of the body portion 22 of the first locking member 16, and straight edges about 50% longer than those of the body portion 22 of the first locking member 16. The apertures 86 are oriented such that their straight sides are perpendicular to the leading edge 84.

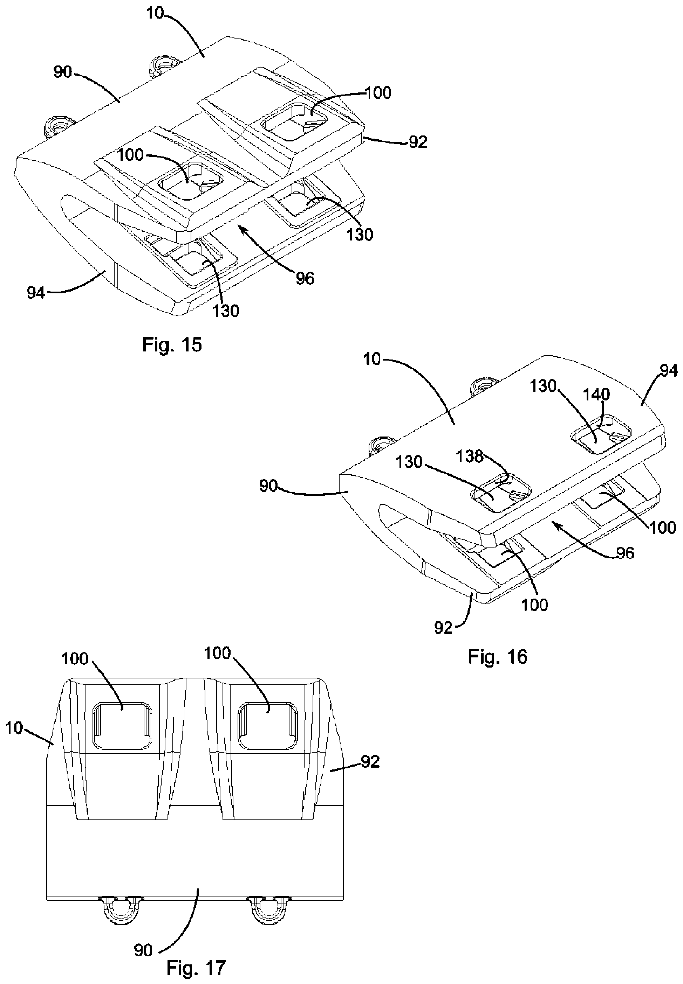

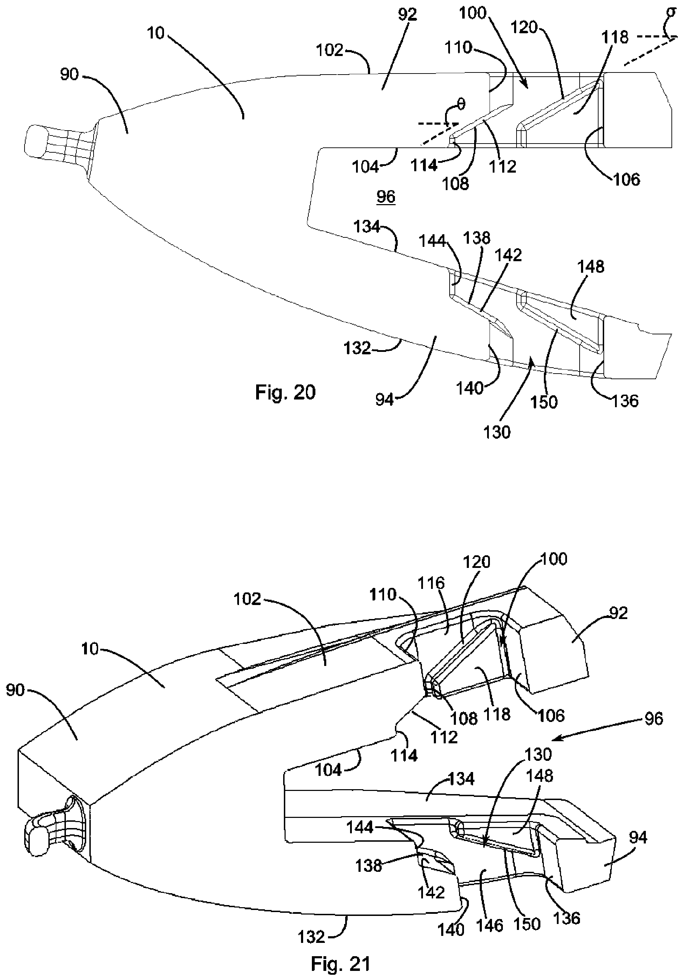

Figures 14 to 21 show a wing shroud 10 arranged to locate about the bucket edge 12. The wing shroud 10 has a forward portion 90 which forms a sacrificial wear portion, in use; and a first leg 92 and a second leg 94 which extend rearwardly of the forward portion 90 and which combine to form a cavity 96 sized to receive the bucket edge 12. The wing shroud 10 has a longitudinal direction; being the direction in which the wing shroud 10 is moved to locate on the bucket edge 12. In use, the longitudinal direction is parallel to the outer face 80 of the bucket edge 12, and perpendicular to the leading edge 84.

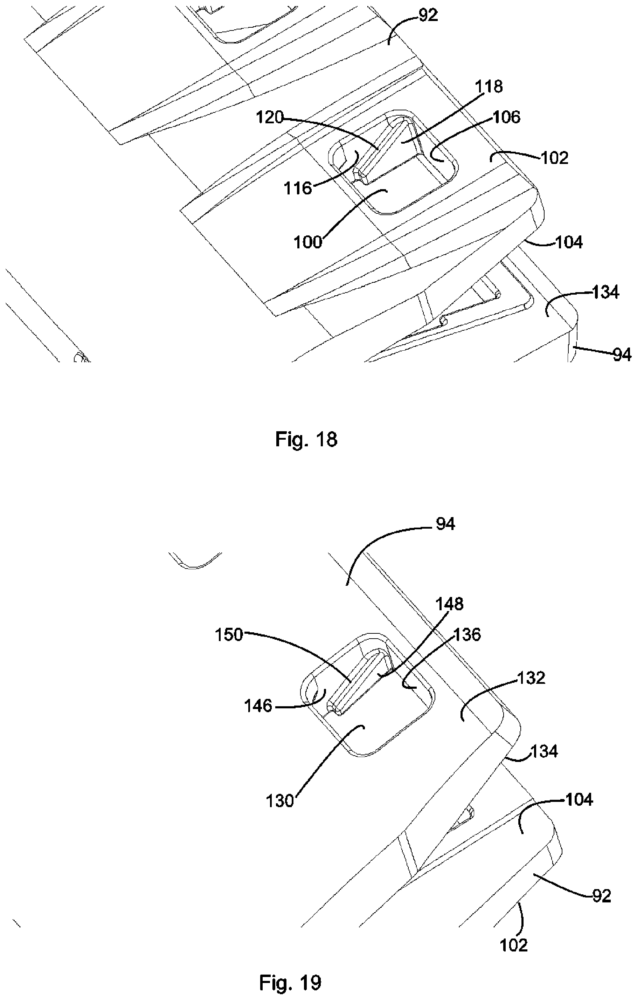

The first leg 92 includes two laterally spaced first lock receiving apertures 100. The first lock receiving apertures 100 are laterally spaced by a distance corresponding to the apertures 86 of the bucket edge 12, such that when the wing shroud 10 is located over the bucket edge 12 the first lock receiving apertures 100 locate over the apertures 86 of the bucket edge 12. The first lock receiving apertures 100 are identical, and one first lock receiving aperture 100 is shown in greater detail in Figure 18.

The first lock receiving aperture 100 extends between an outer face 102 of the first leg 92 and an inner face 104 of the first leg 92. The first lock receiving aperture 100 has a rear wall 106 which extends from the outer face 102 to the inner face 104, and which is perpendicular to the outer face 102. The first lock receiving aperture 100 has a front wall 108 having three portions: an outer portion 110 extending from the outer face 102 towards the inner face 104, the outer portion 110 being parallel to the rear wall 106; an angled surface 112 extending inwardly from the outer portion 110 at an angle away from the rear wall 106; and an inner lip portion 114, the inner lip portion 114 extending from the inner face 104 towards the outer face 102, the inner lip portion 114 being parallel to the rear wall 106. The outer portion 110 extends through about half of the distance between the outer face 102 and the inner face 104. The inner lip portion 114 extends through about 15% of this distance.

The angled surface 112 is angled at an acute angle θ relative to the longitudinal direction of the wing shroud 10. This acute angle θ is the same as the acute angle α of the collar 34; that is, about 30°.

The distance between the outer portion 110 of the front wall 108 and the rear wall 106 is slightly greater than the distance between the front wall 44 of the collar 34 and the rear wall 30 of the head receiving region 26 of the first locking member 16.

The first lock receiving aperture 100 has two opposed side walls 116. The distance between the opposed side walls 116 is slightly greater than the lateral extent of the collar 34 of the first locking member 16.

Each of the side walls 116 has an inwardly projecting guide 118. The inwardly projecting guide 118 is right-triangular prismatic, with a base running along the inner face 104 of the first leg 92 and a side running along the rear wall 106. The hypotenuse of the right-triangle forms a guiding surface 120 which extends at an incline from the rear wall 106 and the outer face 102 towards the front wall 108 and the inner face 104. The guiding surface 120 forms an acute angle σ relative to the longitudinal direction of the wing shroud 10. The guiding surface 120 is parallel to the angled surface 112 of the front wall 108; that is, is at an angle σ of about 30° relative to the longitudinal direction of the wing shroud 10.

The two projecting guides 118 are spaced apart by a distance slightly greater than the width of the head receiving region 26 between its two side walls 32, and smaller than the lateral extent of the collar 34 of the first locking member 16.

The arrangement is such that the first locking member 16 can locate within the first lock receiving aperture 100. As the first locking member 16 enters the first lock receiving aperture 100: the front wall 44 of the collar 34 loosely locates against the outer portion 110 of the front wall 108, and the rear wall 30 of the head receiving region 26 loosely locates against the rear wall 106 of the first lock receiving aperture 100.

The first locking member 16 can be entered into the first lock receiving aperture 100 until the guiding surfaces 36 of the first locking member 16 rest against the guiding surfaces 120 of the first lock receiving aperture 100. At this point the front wall 44 of the collar 34 just clears the outer portion 110 of the front wall 108 of the first lock receiving aperture 100.

The first locking member 16 can now move in a plane defined by the guiding surfaces 120 of the first lock receiving aperture 100, with the guiding surfaces 36 of the first locking member 16 moving along the guiding surfaces 120 of the first lock receiving aperture 100, and the outer facing surface 42 of the first locking member 16 moving along the angled surface 112 of the first lock receiving aperture 100. The angled surface 112 thus acts as an inner facing surface for the first lock receiving aperture 100.

The second leg 94 includes two laterally spaced second lock receiving apertures 130. The second lock receiving apertures 130 are laterally spaced and correspond to the positions of the first lock receiving apertures 100, such that when the wing shroud 10 is located over the bucket edge 12: the first lock receiving apertures 100, the apertures 86 of the bucket edge 12, and second lock receiving apertures 130 are all aligned. The second lock receiving apertures 130 are identical, and one second lock receiving aperture 130 is shown in greater detail in Figure 19.

The second lock receiving aperture 130 extends between an outer face 132 of the second leg 94 and an inner face 134 of the second leg 94. The second lock receiving aperture 130 has a rear wall 136 which extends from the outer face 132 to the inner face 134, and which is co-planar to the rear wall 106 of the first lock receiving aperture 100. The second lock receiving aperture 130 has a front wall 138 having three portions: an outer portion 140 extending from the outer face 132 towards the inner face 134, the outer portion 140 being parallel to the rear wall 136; an angled surface 142 extending inwardly from the outer portion 140 at an angle away from the rear wall 136; and an inner portion 144, the inner portion 144 extending from the inner face 134 towards the outer face 132, the inner portion 144 being parallel to the rear wall 136. The outer portion 140 extends through about half of the distance between the outer face 132 and the inner face 134. The inner portion 144 extends through about 45% of this distance.

The angled surface 142 is angled at an acute angle relative to the longitudinal direction of the wing shroud 10. This acute angle is the same as the acute angle of the collar 58; that is, about 30°.

The distance between the outer portion 140 of the front wall 138 and the rear wall 136 is slightly greater than the distance between the front wall 64 and the rear wall 66 of the collar 58 of the second locking member 18.

The second lock receiving aperture 130 has two opposed side walls 146. The distance between the opposed side walls 146 is slightly greater than the lateral extent of the collar 58 of the second locking member 18.

Each of the side walls 146 has an inwardly projecting guide 148. The inwardly projecting guide 148 is right-triangular prismatic, with a base running along the inner face 134 of the second leg 94 and a side running along the rear wall 136. The hypotenuse of the right-triangle forms a guiding surface 150 which extends at an incline from about halfway up the rear wall 136 towards the front wall 138 and the inner face 134. The guiding surface 150 is parallel to the angled surface 142 of the front wall 138; that is, is at an angle of about 30° relative to the longitudinal direction of the wing shroud 10.

The two projecting guides 148 are spaced apart by a distance greater than the width of the body portion 52, and smaller than the lateral extent of the collar 58 of the second locking member 18.

The arrangement is such that the second locking member 18 can locate within the second lock receiving aperture 130. As the second locking member 18 enters the second lock receiving aperture 130 the front wall 64 of the collar 58 loosely locates against the outer portion 140 of the front wall 138, and the rear wall 66 of the collar 58 loosely locates against the rear wall 136 of the second lock receiving aperture 130.

The second locking member 18 can be entered into the second lock receiving aperture 130 until the guiding surfaces 60 of the second locking member 18 rest against the guiding surfaces 150 of the second lock receiving aperture 130. At this point the front wall 64 of the collar 58 just clears the outer portion 140 of the front wall 138 of the second lock receiving aperture 130.

The second locking member 18 can now move in a plane defined by the guiding surfaces 150 of the second lock receiving aperture 130, with the guiding surfaces 60 of the second locking member 18 moving along the guiding surfaces 150 of the second lock receiving aperture 130, and the outer facing surface 62 of the second locking member 18 moving along the angled surface 142 of the second lock receiving aperture 130. The angled surface 142 thus acts as an inner facing surface for the second lock receiving aperture 130.

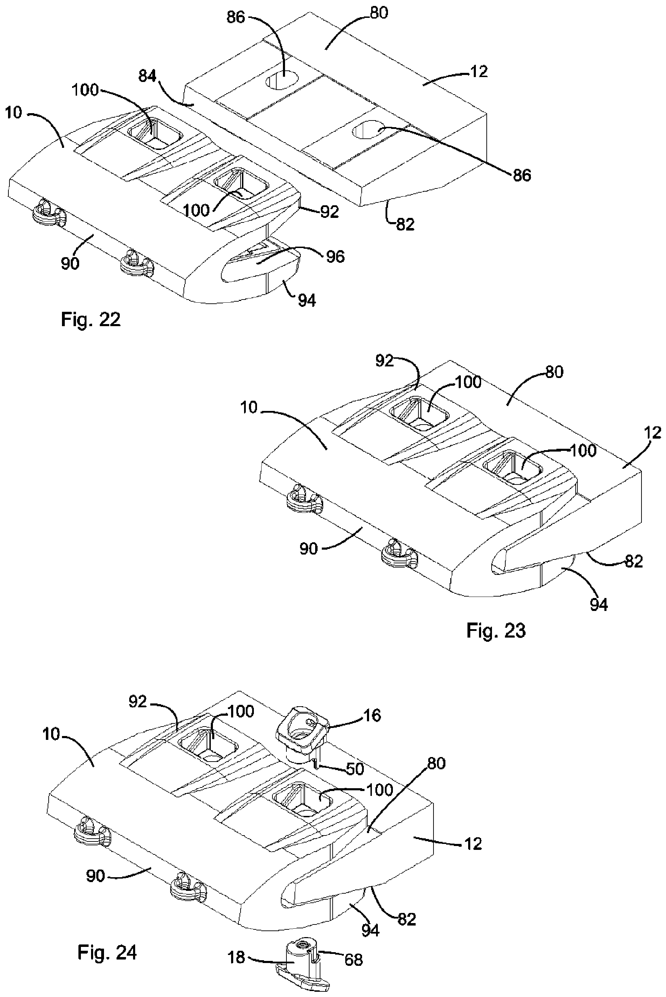

Locking of the wing shroud 10 to the bucket edge 12 will now be described with reference to Figures 22 to 28.

The wing shroud 10 is slid in the longitudinal direction onto the bucket edge 12 with the leading edge 84 locating within the cavity 96 until the inner face 104 of the first leg 92 abuts the outer face 80 of the bucket edge 12, and the inner face 134 of the second leg 94 abuts the inner face 82 of the bucket edge 12. Each pair of aligned first and second lock receiving apertures 100, 130 locate on either side of an aperture 86 of the bucket edge 12.

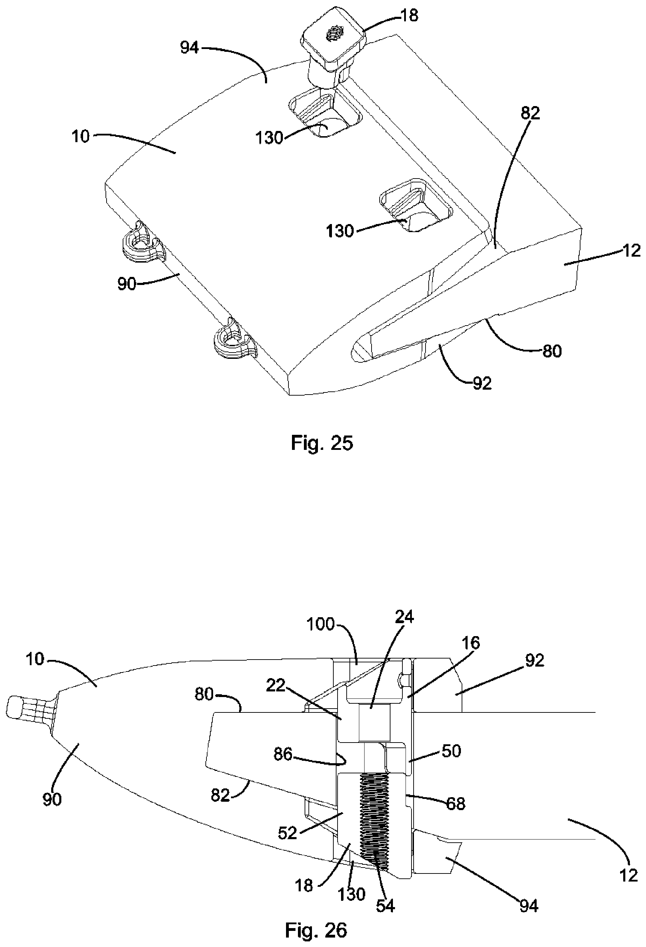

A first locking member 16 is positioned in each first lock receiving aperture 100 and a second locking member 18 is positioned in each second locking aperture 130. In each case the skirt 50 of the first locking member 16 locates within the cut-out 68 of the second locking member 18, facing a rear wall of the aperture 86. A front surface of the body portions 22, 52 abuts a front wall of the aperture 86. This arrangement is shown in cross section in Figure 26.

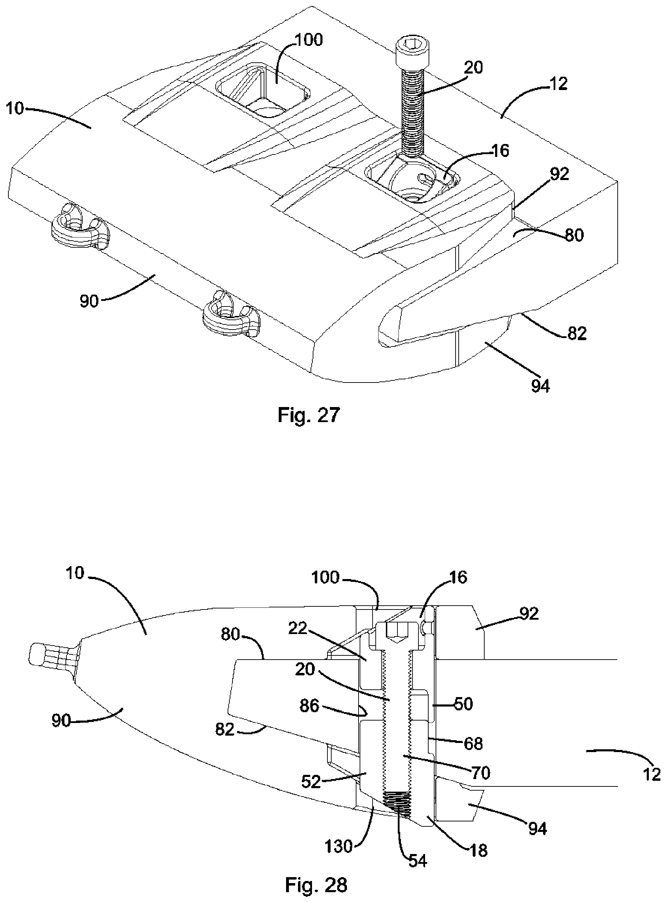

The bolt 20 is introduced via the axial bore 24 of the first locking member 16 and threaded into the threaded axial bore 54 of the second locking member 18. This arrangement is shown in cross section in Figure 28.

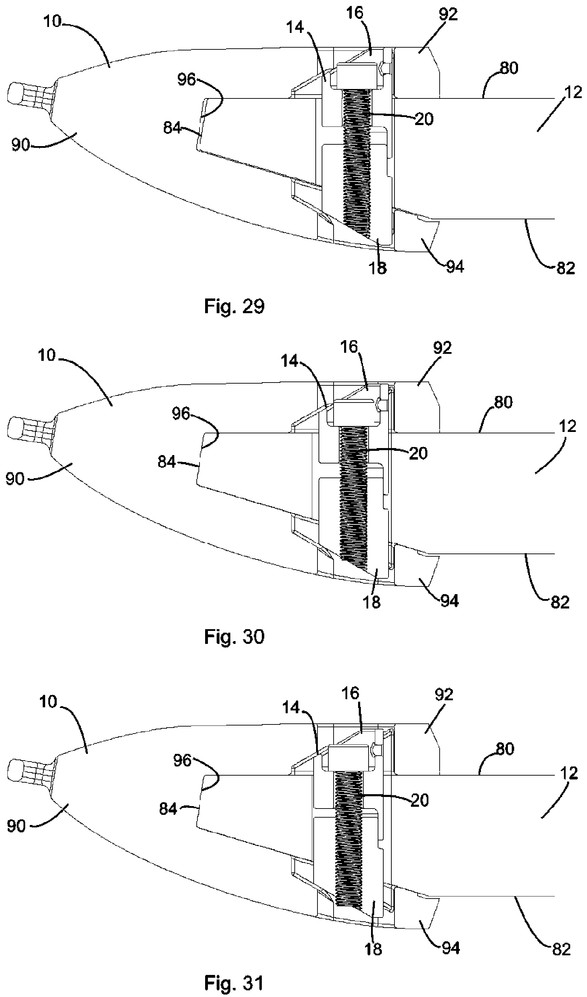

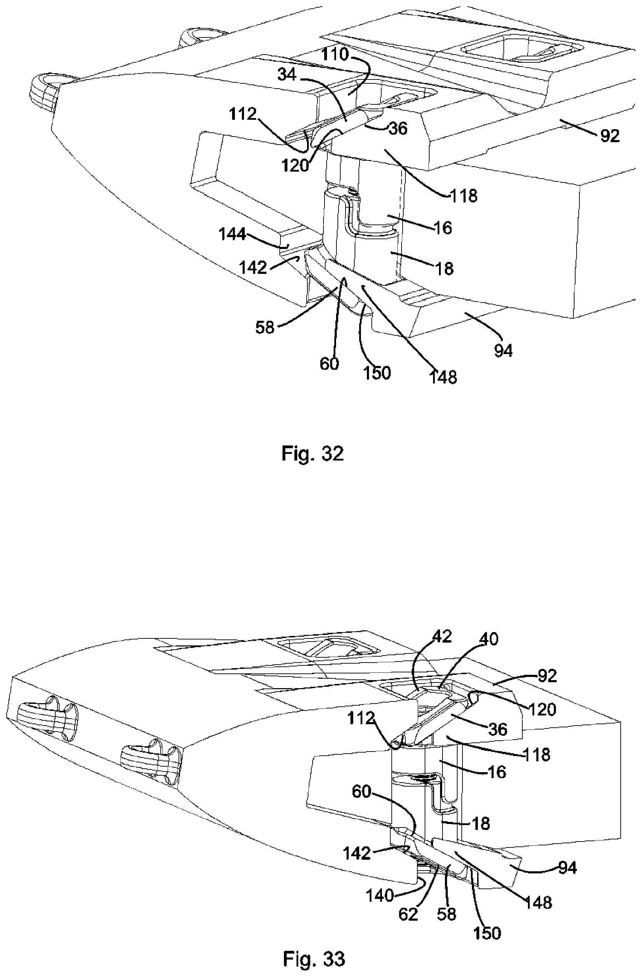

Tightening of the bolt 20 causes the first locking member 16 to move axially towards the second locking member 18, reducing the distance between the collar 34 of the first locking member 16 and the collar 58 of the second locking member 18. This causes the guiding surfaces 36, 60 of the collars 34, 58 to bear against the guiding surfaces 120, 150 of the wing shroud 10, thus forcing the wing shroud 10 rearwardly in the longitudinal direction relative to the bucket edge 12. This tightening is shown in Figures 29 to 31. The action of the guiding surfaces 36, 60 against the guiding surfaces 120, 150 is shown in Figures 32 and 33.

This tightening can continue until the leading edge 84 of the bucket edge 12 abuts the inside of the forward portion 90 of the wing shroud 10. In this position the wing shroud 10 is tightly locked against the bucket edge 12. Should any of the components wear slightly, and the lock 14 become loose, the bolt 20 can be further tightened to remove any looseness.

The wing shroud 10 can be removed by unwinding and removal of the bolts 20, and then the first and second lock members 16, 18 can be readily pried out from their position.

## Claims

1. A lock (14) for a ground engaging tool (10), the lock (14) having a first locking member (16), a second locking member (18) and a tightening element (20);
the first locking member (16) having an axial bore (24);
the second locking member (18) having an axial bore (54);
the tightening element (20) arranged to locate with the axial bores (24, 54) of the first and second locking members (16, 18), defining an axial direction of the lock (14);
a transverse plane of the lock (14) being defined as perpendicular to the axial direction;
**characterised in that**
the first locking member (16) has at least one planar guiding surface (36), the guiding surface (36) facing generally towards the second locking member (18), the guiding surface (36) being located on a lateral side of the first locking member (16), the guiding surface (36) being oriented at an acute angle (α) relative to the transverse plane, the guiding surface (36) being arranged, in use, to locate against a guiding surface (120) of the ground engaging tool (10) .

2. A lock (14) for a ground engaging tool (10) as claimed in claim 1, wherein the first locking member (16) has two guiding surfaces (36), the two guiding surfaces (36) being located on opposite transverse sides of the first locking member (16), the two guiding surfaces (36) being co-planar.

3. A lock (14) for a ground engaging tool (10) as claimed in claim 1 or claim 2, wherein the acute angle (α) is between 20° and 60°.

4. A lock (14) for a ground engaging tool (10) as claimed in claim 3, wherein the acute angle (α) is between 20° and 45°.

5. A lock (14) for a ground engaging tool (10) as claimed in any preceding claim, wherein the first locking member (16) has an outer facing surface (42), the outer facing surface (42) facing generally away from the second locking member (18), the outer facing surface (42) being generally parallel to the guiding surface (36).

6. A lock (14) for a ground engaging tool (10) as claimed in any preceding claim, wherein the first locking member (16) has an axially aligned body portion (22), and a collar (34) extending laterally of the body portion (22) at an outer end thereof, the collar (34) being oriented at the acute angle (α) relative to the transverse plane.

7. A lock (14) for a ground engaging tool (10) as claimed in any preceding claim , wherein the second locking member (18) has at least one guiding surface (60), the guiding surface (60) facing generally towards the first locking member (16), the guiding surface (60) being located on a lateral side of the second locking member (18), the guiding surface (60) being oriented at an acute angle (δ) relative to the transverse plane.

8. A lock (14) for a ground engaging tool (10) as claimed in claim 7, wherein the second locking member (18) has two guiding surfaces (60), located on opposite lateral sides of the second locking member (18).

9. A lock (14) for a ground engaging tool (10) as claimed in any preceding claim, wherein the first locking member (16) has an axially extending locating portion (50), and the second locking member (18) has a complementary receiving portion (68).

10. A lock (14) for a ground engaging tool (10) as claimed in any preceding claim, wherein the tightening element (20) is an externally threaded bolt (20), and one of the first and second locking members (16, 18) includes an enlarged region (26) in which a head (72) of the bolt (20) may be received, and the other of the first and second locking members (16, 18) has an internally threaded bore (54) in which a shank (70) of the bolt (20) can be engaged.

11. A ground engaging tool (10) arranged to locate about an excavator bucket edge, the ground engaging tool having a longitudinal direction being the direction in which the ground engaging tool is moved to locate on the excavator bucket edge, the ground engaging tool (10) having two legs (92, 94) arranged to locate about the excavator bucket edge (12), a first leg (92) including a first lock receiving aperture (100) and a second leg (94) including a second lock receiving aperture (130), the first and second lock receiving apertures (100, 130) being aligned;
the first lock receiving aperture (100) having two lateral sides (116),
**characterised in that**
at least one lateral side (116) includes a guiding surface (120), the guiding surface (120) being oriented at a first acute angle (σ) relative to the longitudinal direction, the guiding surface (120) facing away from the second lock receiving aperture (130); and
the first lock receiving aperture (100) including an inner facing surface (112), the inner facing surface (112) being oriented at a second acute angle (θ) relative to the longitudinal direction, the inner facing surface (112) facing towards the second lock receiving aperture (130).

12. A ground engaging tool (10) as claimed in claim 11, wherein the first and second acute angles (σ, θ) are both between 20° and 60°.

13. A ground engaging tool (10) as claimed in claim 11 or claim 12, wherein both lateral sides (116) include a guiding surface (120), the two guiding surfaces (120) being parallel to each other and co-planar.

14. A ground engaging tool (10) as claimed in any one of claims 11 to 13, wherein the first lock receiving aperture (100) has a front surface (108) with at least two portions, a first portion (110) extending inwardly from an outer surface (102) of the ground engaging tool (10), and a second portion (112) extending inwardly and forwardly from the first portion (110), the second portion (112) forming the inner facing surface (112).

15. A method of attaching a ground engaging tool (10) to a bucket edge (12), the method including the steps of:
providing at least one aperture (86) passing through the bucket edge (12);
locating the ground engaging tool (10) about the bucket edge (12) such that two legs (92, 94) of the ground engaging tool (10) are positioned about the excavator bucket edge (12), a first leg (92) including a first lock receiving aperture (100) and a second leg (94) including a second lock receiving aperture (130), the first and second lock receiving apertures (100, 130) being aligned with the aperture (86) of the bucket edge (12), the first lock receiving aperture (100) having a guiding surface (120) oriented at an acute angle (σ) relative to a longitudinal direction of the ground engaging tool (10);
**characterised by** the further steps of:
locating a first locking member (16) in the first lock receiving aperture (100) such that a guiding surface (36) of the first locking member (16) is oriented at an acute angle (σ) relative to the longitudinal direction of the ground engaging tool (10);
locating a second locking member (18) in the second lock receiving aperture (130);
connecting axial bores (24, 54) of the first and second locking members (16, 18) by a tightening element (20); and
tightening the tightening element (20) to cause the guiding surface (36) of the first locking member (16) to bear against the guiding surface (120) of the first lock receiving aperture (100), thus urging the ground engaging tool (10) rearwardly relative to the bucket edge (12).

## Patentansprüche

1. Eine Verriegelung (14) für ein bodeneingreifendes Werkzeug (10), wobei die Verriegelung (14) ein erstes Verriegelungselement (16), ein zweites Verriegelungselement (18) und ein Spannelement (20) aufweist;
wobei das erste Verriegelungselement (16) eine axiale Bohrung (24) aufweist;
wobei das zweite Verriegelungselement (18) eine axiale Bohrung (54) aufweist;
wobei das Spannelement (20) so angeordnet ist, dass es in den axialen Bohrungen (24, 54) des ersten und zweiten Verriegelungselements (16, 18) sitzt, wodurch eine axiale Richtung der Verriegelung (14) definiert wird;
wobei eine Querebene der Verriegelung (14) als senkrecht zur axialen Richtung definiert ist; **dadurch gekennzeichnet, dass**
das erste Verriegelungselement (16) mindestens eine ebene Führungsfläche (36) aufweist, wobei die Führungsfläche (36) im Allgemeinen dem zweiten Verriegelungselement (18) zugewandt ist, wobei sich die Führungsfläche (36) an einer lateralen Seite des ersten Verriegelungselements (16) befindet, wobei die Führungsfläche (36) in einem spitzen Winkel (α) relativ zur Querebene ausgerichtet ist, wobei die Führungsfläche (36) im Gebrauch so angeordnet ist, dass sie an einer Führungsfläche (120) des bodeneingreifenden Werkzeugs (10) anliegt.

2. Verriegelung (14) für ein bodeneingreifendes Werkzeug (10) nach Anspruch 1, wobei das erste Verriegelungselement (16) zwei Führungsflächen (36) aufweist, wobei sich die zwei Führungsflächen (36) an gegenüberliegenden Querseiten des ersten Verriegelungselements (16) befinden, wobei die zwei Führungsflächen (36) koplanar sind.

3. Verriegelung (14) für ein bodeneingreifendes Werkzeug (10) nach Anspruch 1 oder Anspruch 2, wobei der spitze Winkel (α) zwischen 20° und 60° liegt.

4. Verriegelung (14) für ein bodeneingreifendes Werkzeug (10) nach Anspruch 3, wobei der spitze Winkel (α) zwischen 20° und 45° liegt.

5. Verriegelung (14) für ein bodeneingreifendes Werkzeug (10) nach einem der vorhergehenden Ansprüche, wobei das erste Verriegelungselement (16) eine nach außen weisende Fläche (42) aufweist, wobei die nach außen weisende Fläche (42) im Allgemeinen von dem zweiten Verriegelungs element (18) abgewandt ist, wobei die nach außen weisende Fläche (42) im Allgemeinen parallel zur Führungsfläche (36) ist.

6. Verriegelung (14) für ein bodeneingreifendes Werkzeug (10) nach einem der vorhergehenden Ansprüche, wobei das erste Verriegelungselement (16) einen axial ausgerichteten Körperabschnitt (22) und einen Bund (34) aufweist, der sich an einem äußeren Ende davon seitlich von dem Körperabschnitt (22) erstreckt, wobei der Bund (34) in dem spitzen Winkel (α) relativ zur Querebene ausgerichtet ist.

7. Verriegelung (14) für ein bodeneingreifendes Werkzeug (10) nach einem der vorhergehenden Ansprüche, wobei das zweite Verriegelungselement (18) mindestens eine Führungsfläche (60) aufweist, wobei die Führungsfläche (60) im Allgemeinen dem ersten Verriegelungselement (16) zugewandt ist, wobei sich die Führungsfläche (60) an einer lateralen Seite des zweiten Verriegelungselements (18) befindet, wobei die Führungsfläche (60) in einem spitzen Winkel (δ) relativ zur Querebene ausgerichtet ist.

8. Verriegelung (14) für ein bodeneingreifendes Werkzeug (10) nach Anspruch 7, wobei das zweite Verriegelungselement (18) zwei Führungsflächen (60) aufweist, die sich an gegenüberliegenden lateralen Seiten des zweiten Verriegelungselements (18) befinden.

9. Verriegelung (14) für ein bodeneingreifendes Werkzeug (10) nach einem der vorhergehenden Ansprüche, wobei das erste Verriegelungselement (16) einen sich axial erstreckenden Positionierabschnitt (50) aufweist und das zweite Verriegelungselement (18) einen komplementären Aufnahmeabschnitt (68) aufweist.

10. Verriegelung (14) für ein bodeneingreifendes Werkzeug (10) nach einem der vorhergehenden Ansprüche, wobei das Spannelement (20) eine Schraube (20) mit Außengewinde ist und eines des ersten und des zweiten Verriegelungselements (16, 18) einen vergrößerten Bereich (26) aufweist, in dem ein Kopf (72) der Schraube (20) aufgenommen werden kann, und das andere des ersten und des zweiten Verriegelungselements (16, 18) eine Bohrung (54) mit Innengewinde aufweist, in die ein Schaft (70) der Schraube (20) eingreifen kann.

11. Bodeneingreifendes Werkzeug (10), das angeordnet ist, um um eine Baggerlöffelkante herum angeordnet zu werden, wobei das bodeneingreifende Werkzeug eine Längsrichtung aufweist, die die Richtung ist, in die das bodeneingreifende Werkzeug bewegt wird, um an der Baggerlöffelkante angeordnet zu werden, wobei das bodeneingreifende Werkzeug (10) zwei Schenkel (92, 94) aufweist, die angeordnet sind, um um die Baggerlöffelkante (12) herum angeordnet zu werden, wobei ein erster Schenkel (92) eine erste Verriegelungsaufnahmeöffnung (100) beinhaltet und ein zweiter Schenkel (94) eine zweite Verriegelungsaufnahmeöffnung (130) beinhaltet, wobei die erste und die zweite Verriegelungsaufnahmeöffnung (100, 130) aufeinander ausgerichtet sind;
wobei die erste Verriegelungsaufnahmeöffnung (100) zwei laterale Seiten (116) aufweist,
**dadurch gekennzeichnet, dass**
mindestens eine laterale Seite (116) eine Führungsfläche (120) beinhaltet, wobei die Führungsfläche (120) in einem ersten spitzen Winkel (σ) relativ zur Längsrichtung ausgerichtet ist, wobei die Führungsfläche (120) von der zweiten Verriegelungsaufnahmeöffnung (130) abgewandt ist; und
die erste Verriegelungsaufnahmeöffnung (100) eine nach innen weisende Fläche (112) beinhaltet, wobei die nach innen weisende Fläche (112) in einem zweiten spitzen Winkel (θ) relativ zur Längsrichtung ausgerichtet ist, wobei die nach innen weisende Fläche (112) der zweiten Verriegelungsaufnahmeöffnung (130) zugewandt ist.

12. Bodeneingreifendes Werkzeug (10) nach Anspruch 11, wobei der erste und der zweite spitze Winkel (σ, θ) beide zwischen 20° und 60° liegen.

13. Bodeneingreifendes Werkzeug (10) nach Anspruch 11 oder Anspruch 12, wobei beide lateralen Seiten (116) eine Führungsfläche (120) beinhalten, wobei die zwei Führungsflächen (120) parallel zueinander und koplanar sind.

14. Bodeneingreifendes Werkzeug (10) nach einem der Ansprüche 11 bis 13, wobei die erste Verriegelungsaufnahmeöffnung (100) eine Vorderfläche (108) mit mindestens zwei Abschnitten aufweist, wobei sich ein erster Abschnitt (110) von einer Außenfläche (102) des bodeneingreifenden Werkzeugs (10) nach innen erstreckt und sich ein zweiter Abschnitt (112) von dem ersten Abschnitt (110) nach innen und nach vorne erstreckt, wobei der zweite Abschnitt (112) die nach innen weisende Fläche (112) bildet.

15. Verfahren zum Befestigen eines bodeneingreifenden Werkzeugs (10) an einer Löffelkante (12), wobei das Verfahren die Schritte umfasst:
Bereitstellen mindestens einer Öffnung (86), die durch die Löffelkante (12) verläuft;
Anordnen des bodeneingreifenden Werkzeugs (10) um die Löffelkante (12) herum, sodass zwei Schenkel (92, 94) des bodeneingreifenden Werkzeugs (10) um die Baggerlöffelkante (12) herum positioniert sind, wobei ein erster Schenkel (92) eine erste Verriegelungsaufnahmeöffnung (100) beinhaltet und ein zweiter Schenkel (94) eine zweite Verriegelungsaufnahmeöffnung (130) beinhaltet, wobei die erste und die zweite Verriegelungsaufnahmeöffnung (100, 130) auf die Öffnung (86) der Löffelkante (12) ausgerichtet sind, wobei die erste Verriegelungsaufnahmeöffnung (100) eine Führungsfläche (120) aufweist, die in einem spitzen Winkel (σ) relativ zu einer Längsrichtung des bodeneingreifenden Werkzeugs (10) ausgerichtet ist;
**gekennzeichnet durch** die weiteren Schritte:
Anordnen eines ersten Verriegelungselements (16) in der ersten Verriegelungsaufnahmeöffnung (100), sodass eine Führungsfläche (36) des ersten Verriegelungselements (16) in einem spitzen Winkel (α) relativ zur Längsrichtung des bodeneingreifenden Werkzeugs (10) ausgerichtet ist;
Anordnen eines zweiten Verriegelungselements (18) in der zweiten Verriegelungsaufnahmeöffnung (130);
Verbinden axialer Bohrungen (24, 54) des ersten und des zweiten Verriegelungselements (16, 18) durch ein Spannelement (20); und
Festziehen des Spannelements (20), um zu bewirken, dass die Führungsfläche (36) des ersten Verriegelungselements (16) an der Führungsfläche (120) der ersten Verriegelungsaufnahmeöffnung (100) anliegt, wodurch das bodeneingreifende Werkzeug (10) relativ zur Löffelkante (12) nach hinten gedrängt wird.

## Revendications

1. Verrou (14) pour un outil d'attaque du sol (10), le verrou (14) comportant un premier élément de verrouillage (16), un second élément de verrouillage (18) et un élément de serrage (20) ;
le premier élément de verrouillage (16) ayant un trou axial (24) ;
le second élément de verrouillage (18) ayant un trou axial (54) ;
l'élément de serrage (20) étant agencé pour se loger avec les trous axiaux (24, 54) des premier et second éléments de verrouillage (16, 18), définissant une direction axiale du verrou (14) ;
un plan transversal du verrou (14) étant défini comme étant perpendiculaire à la direction axiale ;
**caractérisé en ce que**
le premier élément de verrouillage (16) présente au moins une surface de guidage plane (36), la surface de guidage (36) étant orientée généralement vers le second élément de verrouillage (18), la surface de guidage (36) étant située sur un côté latéral du premier élément de verrouillage (16), la surface de guidage (36) étant orientée selon un angle aigu (α) par rapport au plan transversal, la surface de guidage (36) étant agencée, en cours d'utilisation, pour venir en appui contre une surface de guidage (120) de l'outil d'attaque du sol (10).

2. Verrou (14) pour un outil d'attaque du sol (10) selon la revendication 1, dans lequel le premier élément de verrouillage (16) comporte deux surfaces de guidage (36), les deux surfaces de guidage (36) étant situées sur des côtés transversaux opposés du premier élément de verrouillage (16), les deux surfaces de guidage (36) étant coplanaires.

3. Verrou (14) pour un outil d'attaque du sol (10) selon la revendication 1 ou la revendication 2, dans lequel l'angle aigu (α) est compris entre 20° et 60°.

4. Verrou (14) pour un outil d'attaque du sol (10) selon la revendication 3, dans lequel l'angle aigu (α) est compris entre 20° et 45°.

5. Verrou (14) pour un outil d'attaque du sol (10) selon l'une quelconque des revendications précédentes, dans lequel le premier élément de verrouillage (16) comporte une surface tournée vers l'extérieur (42), la surface tournée vers l'extérieur (42) étant orientée généralement à l'opposé du second élément (18), la surface tournée vers l'extérieur (42) étant généralement parallèle à la surface de guidage (36).

6. Verrou (14) pour un outil d'attaque du sol (10) selon l'une quelconque des revendications précédentes, dans lequel le premier élément de verrouillage (16) comporte une partie de corps alignée axialement (22), et un collier (34) s'étendant latéralement depuis la partie de corps (22) à une extrémité extérieure de celle-ci, le collier (34) étant orienté selon l'angle aigu (α) par rapport au plan transversal.

7. Verrou (14) pour un outil d'attaque du sol (10) selon l'une quelconque des revendications précédentes, dans lequel le second élément de verrouillage (18) comporte au moins une surface de guidage (60), la surface de guidage (60) étant orientée généralement vers le premier élément de verrouillage (16), la surface de guidage (60) étant située sur un côté latéral du second élément de verrouillage (18), la surface de guidage (60) étant orientée selon un angle aigu (δ) par rapport au plan transversal.

8. Verrou (14) pour un outil d'attaque du sol (10) selon la revendication 7, dans lequel le second élément de verrouillage (18) comporte deux surfaces de guidage (60), situées sur des côtés latéraux opposés du second élément de verrouillage (18).

9. Verrou (14) pour un outil d'attaque du sol (10) selon l'une quelconque des revendications précédentes, dans lequel le premier élément de verrouillage (16) comporte une partie de positionnement s'étendant axialement (50), et le second élément de verrouillage (18) comporte une partie de réception complémentaire (68).

10. Verrou (14) pour un outil d'attaque du sol (10) selon l'une quelconque des revendications précédentes, dans lequel l'élément de serrage (20) est un boulon fileté extérieurement (20), et l'un des premier et second éléments de verrouillage (16, 18) comprend une région élargie (26) dans laquelle une tête (72) du boulon (20) peut être reçue, et l'autre des premier et second éléments de verrouillage (16, 18) présente un alésage taraudé intérieurement (54) dans lequel une tige (70) du boulon (20) peut être engagée.

11. Outil d'attaque du sol (10) agencé pour se positionner autour d'un bord de godet d'excavatrice, l'outil d'attaque du sol ayant une direction longitudinale qui est la direction dans laquelle l'outil d'attaque du sol est déplacé pour se positionner sur le bord de godet d'excavatrice, l'outil d'attaque du sol (10) ayant deux branches (92, 94) agencées pour se positionner autour du bord de godet d'excavatrice (12), une première branche (92) comprenant une première ouverture de réception de verrou (100) et une seconde branche (94) comprenant une seconde ouverture de réception de verrou (130), les première et seconde ouvertures de réception de verrou (100, 130) étant alignées ;
l'première ouverture de réception de verrou (100) ayant deux côtés latéraux (116),
**caractérisé en ce que**
au moins un côté latéral (116) comprend une surface de guidage (120), la surface de guidage (120) étant orientée selon un premier angle aigu (σ) par rapport à la direction longitudinale, la surface de guidage (120) étant tournée à l'opposé de la seconde ouverture de réception de verrou (130) ; et
la première ouverture de réception de verrou (100) comprenant une surface tournée vers l'intérieur (112), la surface tournée vers l'intérieur (112) étant orientée selon un second angle aigu (θ) par rapport à la direction longitudinale, la surface tournée vers l'intérieur (112) étant tournée vers la seconde ouverture de réception de verrou (130).

12. Outil d'attaque du sol (10) selon la revendication 11, dans lequel les premier et second angles aigus (σ, θ) sont tous deux compris entre 20° et 60°.

13. Outil d'attaque du sol (10) selon la revendication 11 ou la revendication 12, dans lequel les deux côtés latéraux (116) comprennent une surface de guidage (120), les deux surfaces de guidage (120) étant parallèles entre elles et coplanaires.

14. Outil d'attaque du sol (10) selon l'une quelconque des revendications 11 à 13, dans lequel la première ouverture de réception de verrou (100) présente une surface avant (108) avec au moins deux parties, une première partie (110) s'étendant vers l'intérieur depuis une surface extérieure (102) de l'outil d'attaque du sol (10), et une seconde partie (112) s'étendant vers l'intérieur et vers l'avant depuis la première partie (110), la seconde partie (112) formant la surface tournée vers l'intérieur (112).

15. Procédé de fixation d'un outil d'attaque du sol (10) à un bord de godet (12), le procédé comprenant les étapes consistant à :
fournir au moins une ouverture (86) traversant le bord de godet (12) ;
positionner l'outil d'attaque du sol (10) autour du bord de godet (12) de telle sorte que deux branches (92, 94) de l'outil d'attaque du sol (10) soient positionnées autour du bord de godet d'excavatrice (12), une première branche (92) comprenant une première ouverture de réception de verrou (100) et une seconde branche (94) comprenant une seconde ouverture de réception de verrou (130), les première et seconde ouvertures de réception de verrou (100, 130) étant alignées avec l'ouverture (86) du bord de godet (12), la première ouverture de réception de verrou (100) ayant une surface de guidage (120) orientée selon un angle aigu (σ) par rapport à une direction longitudinale de l'outil d'attaque du sol (10) ;
**caractérisé par** les étapes supplémentaires consistant à :
positionner un premier élément de verrouillage (16) dans la première ouverture de réception de verrou (100) de telle sorte qu'une surface de guidage (36) du premier élément de verrouillage (16) soit orientée selon un angle aigu (α) par rapport à la direction longitudinale de l'outil d'attaque du sol (10) ;
positionner un second élément de verrouillage (18) dans la seconde ouverture de réception de verrou (130) ;
relier des alésages axiaux (24, 54) des premier et second éléments de verrouillage (16, 18) par un élément de serrage (20) ; et
serrer l'élément de serrage (20) pour amener la surface de guidage (36) du premier élément de verrouillage (16) à porter contre la surface de guidage (120) de la première ouverture de réception de verrou (100), poussant ainsi l'outil d'attaque du sol (10) vers l'arrière par rapport au bord de godet (12).
